# EUROPEAN PATENT APPLICATION

(11) **EP 3 646 944 A1**
(43) Date of publication of application: **06.05.2020**
(21) Application number: 18203509.7
(22) Date of filing: 30.10.2018
(51) Int. Cl.: B01J 3/06

(54) **HIGH-PRESSURE SYNTHESIS OF DIAMOND**

(71) Applicant: Johann Wolfgang Goethe-Universität, 60323 Frankfurt am Main (DE)
(72) Inventor: Matjuschkin, Vladimir, 60320 Frankfurt am Main (DE); Woodland, Alan B., 60439 Frankfurt am Main (DE)
(74) Representative: Lucke, Andreas

(57) **Abstract**

Disclosed herein are a device and a method for synthesizing diamond. The device comprises an inner capsule containing a buffer medium for stabilizing a hydrogen fugacity, the inner capsule consisting of a hydrogen-permeable material; an outer capsule enclosing the inner capsule, wherein the outer capsule contains a reaction medium containing reactants for a chemical reaction yielding diamond; and a pressure medium surrounding the outer capsule, wherein the pressure medium is configured to transfer a pressure applied to an outer surface of the pressure medium to an outer surface of the outer capsule and wherein the pressure medium is further configured to inhibit hydrogen exchange through the pressure medium at a temperature of the pressure medium and a pressure applied to the pressure medium that are required to transform the reaction medium to a supercritical phase.

## Description

### FIELD OF THE INVENTION

The present invention is in the field of chemistry and earth science. In particular, the invention relates to a device and a method to synthesize diamond from a carbon-containing supercritical fluid.

### BACKGROUND

Diamond exhibits extraordinary material properties like the largest thermal conductivity and highest hardness of all known bulk materials, which result from the strong covalent bonding between the carbon atoms in the diamond cubic crystal structure. Besides the use as a gem stone, diamond is employed in a large variety of scientific and industrial applications, for example as a cutting or drilling tool, as a heat conductor as well as for biomedical imaging and quantum computing. Due to the limited supply of naturally formed diamond, the vast majority of diamonds for industrial use are artificially grown synthetic diamonds.

The two most common techniques for growing synthetic diamonds are chemical vapor deposition and high-pressure high-temperature (HPHT) synthesis. The former is mostly used for scientific applications as it enables the growth of very clean samples and a precise control of the properties of the diamonds, but is not suitable for large-scale mass production. The high-pressure high-temperature synthesis relies on the fact that a diamond lattice structure is thermodynamically more favorable for carbon atoms than a graphite lattice structure at high pressures and high temperatures - in contrast to room temperature, where the thermodynamic ground state is the graphite structure. Hence, by applying a high pressure and a high temperature to a solid carbon source, for example a block of graphite, the carbon atoms can crystallize to form diamonds.

Conventional HPHT methods, however, typically require very high pressures on the order of 16-25 GPa and temperatures exceeding 1600°C. Thus, these methods often involve complex and expensive apparatuses in order to achieve the conditions required for an efficient synthesis. Additionally, the conversion is slow such that the synthesis occurs on long timescales, which can be as long as multiple weeks even when using catalysts. Furthermore, carbon sources with high carbon content as well as the use of diamond seed crystals may be necessary.

As an alternative approach, the synthesis of diamond from carbon-containing fluids under high pressure and high temperature has been suggested and studied experimentally, see for example A. G. Sokol et al., Diamond and Related Materials 10, 2131 (2001*)* and I. Konyashin et al., Materials Letters 183, 14 (2016*).* Under appropriate conditions, diamond crystals can form in a carbon-containing fluid through a chemical reaction. These reactions can take place at substantially lower pressures and temperatures as compared to conventional HPHT syntheses. To perform the synthesis, the carbon-containing fluid can be enclosed in a capsule, which may additionally contain a buffer medium. The capsule is then heated and a pressure is applied to the capsule in order to initiate the reaction. However, maintaining the conditions required for a transformation of the reactants to diamond poses significant challenges, which have so far prevented the use of such methods for large-scale synthesis of diamond, see e.g. A. G. Sokol et al., Geochimica et Cosmochimica Acta 73, 5820 (2009*).*

### SUMMARY OF THE INVENTION

The object of the invention is thus to provide a device and a method for the efficient synthesis of diamond from a carbon-containing fluid at a low pressure and a low temperature without the need of diamond seed crystals. This object is met by a device and a method according to claim 1 and 18, respectively. Embodiments of the present invention are detailed in the dependent claims.

The device for synthesizing diamond comprises: (a) an inner capsule containing a buffer medium for stabilizing a hydrogen fugacity, the inner capsule consisting of a hydrogen-permeable material; (b) an outer capsule enclosing the inner capsule, wherein the outer capsule contains a reaction medium containing reactants for a chemical reaction yielding diamond; and (c) a pressure medium surrounding the outer capsule. The pressure medium is configured to transfer a pressure applied to an outer surface of the pressure medium to an outer surface of the outer capsule. The pressure medium is further configured to inhibit hydrogen exchange through the pressure medium at a temperature of the pressure medium and a pressure applied to the pressure medium that are required to transform the reaction medium to a supercritical phase.

This device allows for the efficient synthesis of diamond from the reaction medium by overcoming a number of problems associated with devices known from the state of the art. The hydrogen fugacity is critical for maintaining the conditions required for the formation of diamond through the chemical reaction. Even though two-chamber designs with a surrounding pressure medium have been employed previously, see e.g. V. Matjuschkin et al., Contrib. Mineral Petrol 169:9 (2015*),* the devices known so far are only capable of stabilizing the hydrogen fugacity for pure water or under oxidizing conditions with a low hydrogen fugacity, but are not suitable for achieving and maintaining the reducing conditions with a high hydrogen fugacity necessary for transforming the reaction medium to the supercritical phase and initiating the chemical reaction. One limiting factor is the loss of hydrogen from the system, in particular at the high temperatures required for the diamond formation.

In order to stabilize the hydrogen fugacity in the reaction medium, the buffer medium contained in the inner capsule serves as a source and sink of hydrogen that can determine the hydrogen fugacity through its intrinsic equilibrium hydrogen fugacity, which in general depends on the applied temperature and pressure. This can for example occur via a redox reaction taking place in the buffer medium as described in more detail below. The inner capsule forms a closed volume, in which the buffer medium is confined. The hydrogen-permeable material of the inner capsule ensures an efficient transfer of hydrogen between the interior of the inner capsule and its exterior and thus facilitates the equilibration of the hydrogen fugacity between the buffer medium and the reaction medium contained in the outer capsule.

The outer capsule also forms a closed volume and encloses the inner capsule. The reaction medium, which contains the reactants for at least one chemical reaction that as a reaction product yields carbon in a diamond lattice structure as detailed below, is confined to the volume between the inner capsule and the outer capsule. At a temperature and a pressure above a critical point of the reaction medium, the reaction medium forms a supercritical fluid as a liquid phase and a gas phase of the reaction medium cannot be distinguished anymore. In this supercritical phase, diamond can form spontaneously via the above-mentioned chemical reaction. This can for example be achieved by applying an external pressure and a temperature to the pressure medium. Preferably, the applied pressure and temperature are chosen such that the diamond structure is thermodynamically favorable over the graphite structure for carbon atoms.

The pressure medium surrounds the outer capsule and serves two purposes. Firstly, the pressure medium ensures that the pressure applied to the pressure medium, i.e. to one or more outer surfaces of the pressure medium, is imparted on the outer capsule in order to adjust the pressure inside the reaction medium. Preferably, the pressure medium is configured to homogeneously distribute the pressure over the entire exterior surface of the outer capsule to prevent damage to the outer capsule by excessive pressure at isolated points. Secondly, the pressure medium is configured to create a chemically closed system in the interior of the outer capsule by inhibiting hydrogen exchange with the surrounding environment through the pressure medium. This is an essential condition for stabilizing the hydrogen fugacity in the reaction medium through the buffer medium. Under the conditions necessary for the supercritical phase of the reaction medium, the hydrogen fugacity inside the reaction medium is typically much greater than an intrinsic hydrogen fugacity of the environment, e.g. a high-pressure apparatus that the device is placed in. This can lead to a rapid loss of hydrogen from the reaction medium, which cannot be compensated for by the buffer medium. Correspondingly, inhibiting hydrogen exchange through the pressure medium is to be understood as referring to a situation, in which the rate of hydrogen loss through the pressure medium is smaller than a maximum rate of hydrogen that can be supplied by the buffer medium through the inner capsule.

In a preferred embodiment, the device is configured to maintain the supercritical phase of the reaction medium while stabilizing a hydrogen fugacity within the reaction medium to a target value, e.g. by continuously applying the pressure and the temperature to the pressure medium. In particular, the device can be configured to maintain the supercritical phase of the reaction medium for more than 12 hours, preferably more than 24 hours while stabilizing the hydrogen fugacity within the reaction medium to the target value. The target value can for example be the intrinsic hydrogen fugacity of the buffer medium or a certain fraction thereof. In another example, the target value may be a value at which the reaction rate of the above-mentioned chemical reaction exhibits a maximum or a value between a minimum and a maximum hydrogen fugacity required for maintaining the supercritical phase. The target value may furthermore be a range of values, e.g. a range bounded by a minimum and a maximum target value. The target value does not necessarily have to be constant over time and may for example change if a temperature and/or pressure of the reaction medium is/are changed. Maintaining the supercritical phase of the reaction medium may require inhibiting hydrogen exchange as defined above for an extended period of time while the pressure medium is kept at or above the temperature and the pressure required for the reaction medium to enter the supercritical phase. The buffer medium may thus be configured to have a buffering capacity to release or absorb hydrogen that is sufficient to compensate hydrogen loss through the pressure medium for the respective amount of time. Correspondingly, the pressure medium may be configured to maintain its ability to inhibit hydrogen exchange under the applied pressure and temperature.

The pressure medium can further be configured to prevent physical damage of the outer capsule and/or a contamination of the reaction medium at the applied pressure and the applied temperature. Preventing physical damage refers to ensuring the physical integrity of the outer capsule, i.e. to prevent the formation of leaks in the outer capsule and to prevent the outer capsule from disintegrating. This may for example be achieved by using a pressure medium with a small porosity, e.g. borosilicate glasses or soda-lime glasses. To prevent contamination of the reaction medium, the composition of the pressure medium can be chosen appropriately such that constituents of the pressure medium do not leak into the reaction medium. For example, materials containing boron in a reduced form, e.g. boron nitride, may lead to a contamination of the reaction medium by boron.

In a preferred embodiment, the pressure medium contains calcium fluoride (CaF2), in particular polycrystalline calcium fluoride. Preferably, the pressure medium is a solid bulk material. CaF₂ exhibits a small porosity as well as a very low permeability for hydrogen. It is thus well suited for inhibiting hydrogen exchange and protecting the outer capsule and at the same time can prevent contamination of the reaction medium. In particular, the inventors observed that a pressure medium containing CaF₂ can maintain its ability to inhibit hydrogen exchange at high temperatures and high pressures, e.g. a temperature of 1000°C and a pressure of 3 GPa, even when applied for a long time, e.g. more than 24 hours.

Preferably, the material of the inner capsule and a material that the outer capsule consists of are inert with respect to the reaction medium, i.e. the capsule materials do not undergo chemical reactions with the constituents of the reaction medium. Additionally or alternatively, the materials may be configured to not induce chemical reactions of the constituents of the reaction medium, e.g. by acting as a catalyst. In particular, the materials can be configured to not lead to the formation of graphite and/or long-chain hydrocarbon in the reaction medium via a chemical reaction. In another example, the materials can be configured to not induce a dissociation reaction of for example methane and/or ethane if such substances are contained in the reaction medium.

The inner capsule and the outer capsule can e.g. consist of gold, copper, a gold alloy, a copper alloy or a gold-copper alloy. Compared to other potential capsule materials like platinum, palladium, nickel, iron or molybdenum, the aforementioned materials are for example inert with respect to carbonization and graphitization reactions of methane-containing fluids. On the other hand, these materials can provide a sufficient hydrogen permeability to be suitable for the inner capsule. Gold in particular offers the additional advantage of being easily weldable, thereby facilitating the manufacturing of the capsules as well as being less prone to physical damage when applying high pressures and/or high temperatures.

In a preferred embodiment, the buffer medium comprises a metal-metal oxide buffer, in particular a Mo-MoO₂ buffer. A metal-metal oxide buffer comprises water together with a metallic element and/or an oxide of the metallic element. Such a buffer medium can stabilize the hydrogen fugacity through the oxidation and reduction reactions transforming the metal and the oxide into one another. Alternatively or additionally, the buffer medium may comprise other metal-metal oxide buffers, e.g. Fe-FeO, Ni-NiO, Re-ReO₂, Co-CoO or Fe-SiO₂-Fe₂SiO₄, and/or fluid buffers, e.g. COH fluids like H₂O-CH₄-C₂H₆-CO₂. Compared to fluid buffers, metal-metal oxide buffers can provide a larger buffering capacity and allow for a faster equilibration with the reaction medium. The equilibration rate may be further increased by combining a metal-metal oxide buffer with a fluid buffer, e.g. for activation of the metal-metal oxide buffer. The fluid buffer may be a fluid under ambient conditions or may be a solid substance under ambient conditions, which forms a fluid, in particular a supercritical fluid, when the pressure and temperature are applied to the pressure medium.

The reaction medium can contain reactants for at least one of the following chemical reactions, each of which yields carbon in a diamond structure: *CH*₄ → *C*^{(*diamond*)} + 2*H*₂; *C*₂*H*₆ → *C*^{(*diamond*)} + *CH*₄ + *H*₂; and *CH*₄ + *O*₂ → *C*^{(*diamond*)} + 2*H*₂O. Furthermore, the reaction medium can comprise a substance forming a fluid under ambient conditions and/or a fluid-producing substance, which may be solid under ambient conditions and becomes a fluid, in particular a supercritical fluid, at higher temperatures and/or higher pressures. To provide the abovementioned reactants, the reaction medium may for example comprise a carbon-saturated fatty acid like stearic acid or lauric acid, solid methane, adamantane and/or methane clathrate. Correspondingly, under ambient conditions the reactants may be contained in the reaction medium in a chemical form that is different from the one required for the chemical reaction yielding diamond. Stearic acid (C₁₇H₃₅CO₂H) for example dissociates into methane (CH₄), water (H₂O) and carbon (C) under high pressures and temperatures.

In a preferred embodiment, the inner capsule has an ellipsoidal shape, in particular a spherical shape. This may increase the stability of the inner capsule, in particular under high pressures, and may prevent a tilting of the inner capsule towards the walls of the outer capsule or a decentering of the inner capsule within the outer capsule. In another example, the inner capsule may have an approximately spherical shape, e.g. a shape for which the local radius of curvature at each point on the outer surface deviates by at most a factor of 2 from the average radius of curvature at all points on the outer surface.

The device can further comprise a high-pressure apparatus that is configured to apply a pressure to the pressure medium, for example a piston-cylinder apparatus, a belt apparatus or a multi-anvil press. The high-pressure apparatus can be configured to generate a pressure of more than 3.0 GPa, preferably a pressure of at least 5.0 GPa. The high-pressure apparatus may be configured to apply the pressure to one or more outer surfaces of the pressure medium, e.g. by pressing a piston against the corresponding surface. The shape of a surface of the piston facing the pressure medium may be adapted to the shape of the corresponding surface of the pressure medium or vice versa, e.g. in order to homogeneously apply the pressure. The high-pressure apparatus may comprise a pressure sensor to monitor a pressure, e.g. the pressure applied to the pressure medium or a pressure in the vicinity of the pressure medium.

The high-pressure apparatus can further be configured to heat the pressure medium to a temperature exceeding 800°C, preferably a temperature between 1000°C and 1300°C. For this, the high-pressure apparatus may comprise one or more heating elements in contact with or in the vicinity of the pressure medium. The heating element may for example be a resistance furnace comprising a resistive element, e.g. a graphite element, that can be heated by applying a voltage to induce a current through the resistive element. The high-pressure apparatus may comprise a temperature sensor to monitor a temperature, e.g. the temperature of the pressure medium or in the vicinity of the pressure medium.

The reaction medium can further contain diamond seed crystals, i.e. small diamonds that serve as nucleation seeds for the diamond formation. Diamond formed through the abovementioned chemical reaction can accumulate on the surfaces of the seed crystals, thereby causing the seed crystals to grow in size. The seed crystals can for example be diamonds with a maximum extent of less than 1 µm.

Furthermore, the reaction medium can contain a doping material that is provided in addition to the reactants for the diamond formation. During the diamond formation, the doping material may be integrated in the crystal structure of the diamond, e.g. as local impurities or point defects. This can allow for a precise control of physical and/or chemical properties of the synthesized diamond, e.g. an absorption spectrum. The doping material may e.g. comprise boron, nitrogen and/or phosphorus. For example, by adding nitrogen to the reaction medium, diamonds with nitrogen-vacancy centers may be synthesized, which can for example be used for biomedical imaging or quantum computing.

The device can further comprise a sensor capsule that is enclosed by the outer capsule and contains a redox sensor for monitoring a hydrogen fugacity and/or an oxygen fugacity. The redox sensor may for example comprise a metal together with its oxide or a silicate, e.g. (Ni,Mn)O/Ni. Preferably, the redox sensor is a Fe-bearing noble metal alloy, e.g. Pt-Fe, Pd-Fe or Ir-Fe. The sensor capsule may for example consist of olivine and may contain other substances in addition to the redox sensor, e.g. olivine and/or orthopyroxene, in particular as a powder.

The invention further provides a method for synthesizing diamond, which comprises providing a device for synthesizing diamond according to any one of the aforementioned embodiments and adjusting a temperature of the pressure medium and/or a pressure applied to the pressure medium to transform the reaction medium to a supercritical phase.

In one example, if the device comprises a high-pressure apparatus, the high-pressure apparatus may be used to adjust the temperature and/or pressure. In another example, if the device does not comprise a high-pressure apparatus, the device may be placed in a high-pressure apparatus similar to the ones described above in order to adjust the temperature and/or pressure applied to the pressure medium. The temperature and/or pressure are adjusted such that the reaction medium enters a supercritical phase, i.e. such that the pressure and the temperature in the inner capsule exceed the critical temperature and the critical pressure of the reaction medium, respectively. Preferably, the applied temperature and pressure are chosen such that the diamond lattice structure of carbon is thermodynamically favorable over the other carbon lattice structures like graphite. After adjusting the temperature and/or pressure, the temperature and pressure may be applied continuously to the pressure medium for a reaction time in order for diamond to form within the reaction medium. The reaction time may for example be in excess of 24 hours. During the reaction time, the pressure applied to the pressure medium and the temperature of the pressure medium may be changed, e.g. decreased or increased to enhance the reaction efficiency.

In a preferred embodiment, the step of providing the device according the invention comprises manufacturing the device. Manufacturing the device can comprise the following steps: (1) providing the buffer medium in the inner capsule; (2) providing the reaction medium in the outer capsule; (3) enclosing the inner capsule inside the outer capsule; and (4) surrounding the outer capsule by the pressure medium. The numbering of the steps above is for clarity only and does not indicate a certain order of execution. As far as technically feasible, the steps can be permuted and the manufacturing can be performed in an arbitrary order of these steps. In particular, two or more steps may be performed simultaneously at least in part.

In step (1), the buffer medium is provided in the inner capsule, e.g. by placing the buffer medium or its constituents in an open reservoir made of the inner capsule material and subsequently welding the reservoir shut to form the inner capsule. In another example, the inner capsule containing the buffer medium may be provided in an assembled state.

In step (2), the reaction medium is provided in the outer capsule, e.g. by placing a fluid-producing substance serving as a source of the reactants in the outer capsule. In addition to the reaction medium, other substances may be provided in the outer capsule, e.g. a filler powder, which may be used to physically separate the inner and outer capsules. The filler powder can e.g. contain olivine and/or orthopyroxene, in particular in powder form. Preferably, the reaction medium is placed in an open reservoir made of the outer capsule material together with the inner capsule before welding the reservoir shut to form the outer capsule in step (3), thereby enclosing the reaction medium as well as the inner capsule.

In step (4), the outer capsule is surrounded by the pressure medium, for example by placing the outer capsule in a suitable container with an opening and subsequently filling or closing the opening to form the pressure medium surrounding the outer capsule. In another example, side walls of the outer capsule may be surrounded by solid sleeves and the resulting openings at the top and the bottom of the outer capsule as well as other gaps between the sleeves may be filled with a powder.

In a preferred embodiment, the method further comprises maintaining the supercritical phase of the reaction medium while stabilizing a hydrogen fugacity within the reaction medium to a target value. The supercritical phase of the reaction medium may be maintained for more than 12 hours, preferably more than 24 hours or the entire reaction time while stabilizing the hydrogen fugacity within the reaction medium to the target value. This may e.g. be achieved by using a buffer medium as described above with sufficient buffering capacity to control the hydrogen fugacity over an extended period of time and by continuously applying a pressure and a temperature to the pressure medium sufficiently large such that the pressure and the temperature in the inner capsule exceed the respective critical values. Maintaining the supercritical phase can allow for the formation of larger diamond within the reaction medium.

If the buffer medium comprises a metal-metal oxide buffer, providing the buffer medium in the inner capsule can comprise placing a metal component of the metal-metal oxide buffer in an inner capsule material without a metal oxide component of the metal-metal oxide buffer and forming the inner capsule from the inner capsule material, e.g. by welding. This can be advantageous to maximize the buffering capacity of the buffer medium. The metal oxide component can form subsequently, in particular during the reaction time.

Providing the buffer medium in the inner capsule can further comprise shaping the inner capsule to form a sphere or an ellipsoid. For this, the inner capsule may e.g. be pressed after confining the buffer medium in the inner capsule. In other examples, a shape of the open reservoir made of the inner capsule material and/or a welding procedure may be adapted to achieve a spherical or ellipsoidal shape after welding the inner capsule shut.

In a preferred embodiment, the pressure applied to the pressure medium is adjusted to between 3.0 GPa and 10.0 GPa, preferably between 4.0 GPa and 7.0 GPa. In particular, the pressure may be kept in this range during the entire reaction time. The temperature that the temperature of the pressure medium is adjusted to can be between 800°C and 1600°C, preferably between 1000°C and 1300°C. In particular, the temperature of the pressure medium may be kept in this range during the entire reaction time.

### LIST OF FIGURES

In the following, a detailed description of the invention and exemplary embodiments thereof is given with reference to the figures. The figures show schematic illustrations of
Fig. 1: a device for synthesizing diamond according to an exemplary embodiment of the invention;
Fig. 2: a device for synthesizing diamond comprising a high-pressure apparatus in accordance with an embodiment of the invention; and
Fig. 3: a flow chart of a method to synthesizing diamond in accordance with an embodiment of the invention.

### DESCRIPTION OF THE PREFERRED EMBODIMENTS

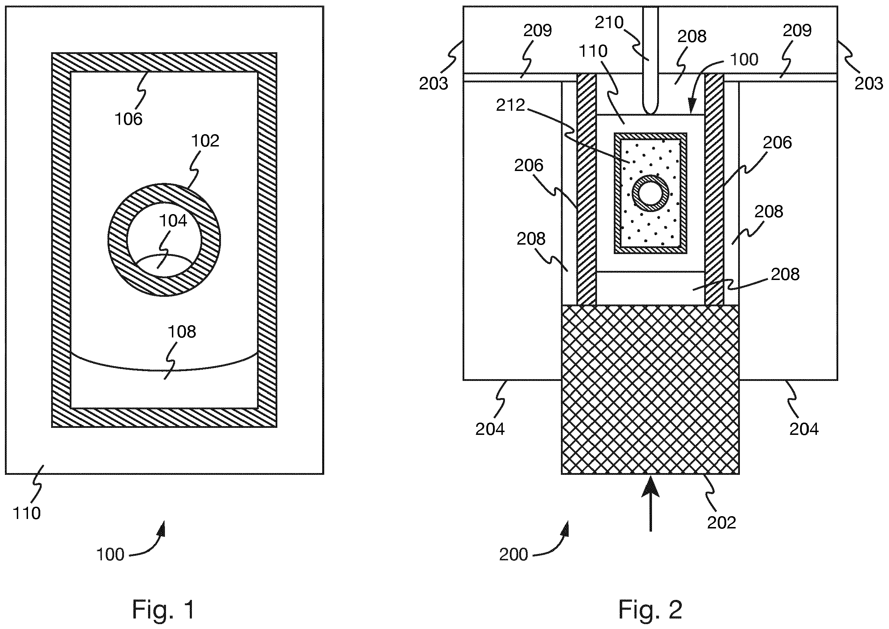

Fig. 1 depicts a cross section of a device 100 for synthesizing diamond in accordance with an embodiment of the invention. The device 100 comprises an inner capsule 102, which contains a buffer medium 104. The inner capsule 102 is enclosed by an outer capsule 106, which also contains a reaction medium 108 and in turn is surrounded by a pressure medium 110.

In this example, the inner capsule 102 has a spherical shape. The outer diameter of the inner capsule 102 may e.g. be between 1 mm and 5 mm with a wall thickness of e.g. between 0.1 mm and 0.5 mm. In other embodiments, the inner capsule 102 may have other shapes, e.g. ellipsoidal, cylindrical, polyhedral, box-shaped or an irregular shape. The inner capsule 102 consists of a hydrogen-permeable material, which is preferably inert with respect to the reaction medium 108. The inner capsule may e.g. consist of gold, copper, a gold alloy, a copper alloy or a gold-copper alloy.

The buffer medium 104 is provided in order to stabilize the hydrogen fugacity in the interior of the outer capsule 106 by exchanging hydrogen through the walls of the inner capsule 102. Given a sufficient buffering capacity and hydrogen exchange rate, the pressure- and temperature-dependent intrinsic equilibrium hydrogen fugacity of the buffer medium 104 determines the hydrogen fugacity within the outer capsule 106, e.g. via a redox reaction, which enables the buffer to absorb and release hydrogen from/to its environment. The buffer medium 104 can for example comprise a metal-metal oxide buffer, e.g. a Mo-MoO2, Fe-FeO, Ni-NiO, Re-ReO₂, Co-CoO or Fe-SiO₂-Fe₂SiO₄ buffer or a combination thereof, a fluid buffer like a COH fluid or a combination thereof. Under ambient conditions, the buffer medium 104 may e.g. be a fluid-producing substance and/or fluid, e.g. the metal component of a metal-metal oxide buffer in 1 µl to 300 µl water.

The outer capsule 106 has a box shape in the example depicted in Fig. 1, but may also have a different shape, e.g. spherical, ellipsoidal, cylindrical, polyhedral or an irregular shape. In particular, the shape of the outer capsule 106 may be adapted to a shape of a pressure chamber of a high-pressure apparatus that the device 100 comprises or is to be placed in. This may facilitate applying a homogeneous pressure to the outer capsule 106 as well as enhance thermal conductivity. The width and height of the outer capsule 106 can each e.g. be between 2 mm and 10 mm and the thickness of the walls of the outer capsule can e.g. be 0.1 mm to 1 mm. The thickness of the walls may be chosen such that the outer capsule 106 when surrounded by the pressure medium 110 remains physically intact when applying a pressure of e.g. 4 to 10 GPa. The outer capsule 106 preferably also consists of a material that is inert with respect to the reaction medium 108, e.g. gold, copper, a gold alloy, a copper alloy or a gold-copper alloy.

The outer capsule 106 encloses the inner capsule 102 and the reaction medium 108. The reaction medium 108 serves as a carbon source for the diamond synthesis and contains reactants for at least one chemical reaction that yields carbon in a diamond lattice structure, e.g. methane (CH₄) and/or ethane (C₂H₆). One advantage of the present invention is that only a relatively low density of reactants is required for an efficient synthesis. Hence, the mass fraction of reactants within the reaction medium 108 may be as low as 1 to 10 percent. Under ambient conditions, the reaction medium 108 may comprise a solid substance that provides the reactants and becomes fluid at higher temperatures and/or pressures, e.g. a carbon-saturated fatty acid like stearic acid or lauric acid. The reaction medium 106 may further contain diamond seed crystals and/or dopants, e.g. nitrogen, phosphorus and/or boron.

Together with the reaction medium 108, other substances may be provided in the outer capsule, for example a filler powder. The filler powder may be used to ensure that the inner and the outer capsules remain physically separated. In addition, the filler powder may be configured to create an environment within the outer capsule that is similar to the conditions under which natural diamond is formed. This may result in synthesized diamond that is very similar to naturally formed diamond and can e.g. not be distinguished spectroscopically from naturally formed diamond. The filler powder can e.g. comprise olivine powder and/or orthopyroxene powder.

The pressure medium 110 surrounds the outer capsule 106 and is provided to transfer an external pressure applied to the pressure medium 110 onto the outer capsule 106. Preferably, the pressure medium 110 is configured to distribute the applied pressure homogeneously over the outer surfaces of the outer capsule 106. In addition, the pressure medium 110 is configured to create a chemically isolated system in the interior of the outer capsule 106. In particular, the pressure medium 110 inhibits the exchange of hydrogen with the surroundings, thereby facilitating the stabilization of the hydrogen fugacity in the reaction medium 108 by the buffer medium 104 even over extended periods of time. Furthermore, the pressure medium may prevent physical damage to the outer capsule 106 under pressure. The pressure medium may for example consist of or comprise calcium fluoride (CaF2), in particular in a polycrystalline form. The thickness of the pressure medium 110 may for example be 2 mm to 10 mm. The thickness of the pressure medium 110 may be chosen such that the outer capsule 106 when surrounded by the pressure medium 110 remains physically intact when applying a pressure of e.g. 4 to 10 GPa.

The device 100 may further comprise or be placed in a high-pressure apparatus 200, e.g. a piston-cylinder apparatus, a belt apparatus or a multi-anvil press. Fig. 2 shows a cross section of an example in which the device 100 is placed in a piston-cylinder apparatus 200 for applying a pressure to the pressure medium 110 and heating the high-pressure medium 110. The piston-cylinder apparatus 200 comprises a piston 202 that is configured to press against a carrier plate 203, which is adjacent to an end face of a carrier 204. The carrier 204 may e.g. have a cylindrical shape. The carrier 204 has a hole, e.g. a cylindrical hole, where the device 100 can be placed in and into which the piston 202 advances in order to apply the pressure e.g. to a bottom surface of the device 100. The carrier 204 is configured to maintain a confining pressure for the device 100. In one example, the carrier plate 203 can be replaced by a cylinder similar to the piston 202.

For heating the device 100, one or more heating elements 206 are provided or placed in the recess or adjacent to the recess. The heating elements 206 can for example be resistive heating elements, e.g. graphite elements, that can be heated by forcing a current through the resistive heating elements. In addition, a spacer material 208 can be provided or placed e.g. between the heating elements 206 and the carrier 204 and/or the pressure medium 110. The spacer material 208 may e.g. electrically insulate the heating elements 206 from the carrier 204, provide thermal insulation and/or enhance mechanical stability of the assembly, e.g. by filling gaps. The spacer material 208 can for example comprise powder or bulk elements consisting of NaCl, MgO, CaF₂, borosilicate glasses and/or soda-lime glasses. An electrically insulating material 209 can be placed between the carrier plate 203 and the carrier 204, e.g. to force the electricity to flow through the heating elements 206.

To monitor the temperature, the high-pressure apparatus 200 can comprise a temperature sensor 210, e.g. a thermocouple based on the thermoelectric effect. The temperature sensor 210 may e.g. be placed inside the hole of the carrier 204 and preferably is in direct contact with the pressure medium 110 to enhance the reliability of a temperature measurement. In addition, the high-pressure apparatus 200 may comprise a pressure sensor, e.g. a piezoelectric pressure sensor.

When the pressure and temperature inside the outer capsule 106 exceed the critical values for the reaction medium 108, the reaction medium becomes a supercritical fluid 212, which may effuse throughout the interior of the outer capsule 106. The supercritical fluid 212 provides the conditions required for the carbon contained in the reaction medium 108 to be transformed into diamond via the chemical reaction.

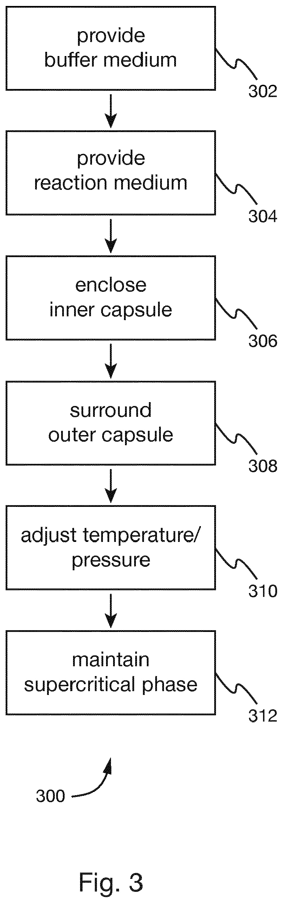

Fig. 3 depicts a flow diagram of an example of a method 300 for synthesizing diamond according to an embodiment of the present invention. In step 302, the buffer medium 104 is provided in the inner capsule 102. For this, the buffer medium 104 may e.g. be placed in an open reservoir, for example a cylinder or box with an opening at the top, consisting of an inner capsule material that the inner capsule 102 is to be formed of, e.g. gold. In one example, the buffer medium 104 initially only comprises water and the metal component of a metal-metal oxide buffer, e.g. Mo, in order to maximize the buffering capacity of the buffer medium 104. Subsequently, the open reservoir can be closed to obtain the inner capsule 102, e.g. by welding. Step 302 can further comprise shaping the inner capsule 102, for example to bring it into a spherical or ellipsoid shape, e.g. be welding, pressing and/or heating. In other embodiments, the inner capsule 102 may already be provided as a sealed volume comprising the buffer medium 104.

In step 304, the reaction medium 108 is provided in the outer capsule 106. For this, the reaction medium 108 can e.g. be placed in an open reservoir, for example a cylinder or box with an opening at the top, consisting of an outer capsule material that the outer capsule 106 is to be formed of subsequently, e.g. gold. In one example, 1/10 to 1/3 of the interior volume of the outer capsule 106 is filled with stearic or lauric acid, e.g. in powder form. The inner capsule 102 may for example be placed on top of the reaction medium 108 inside the open reservoir. The remaining volume of the outer capsule 106 can for example be filled by a filler powder.

In step 306, the inner capsule 102 is enclosed inside the outer capsule 106, e.g. by welding the open reservoir shut to form the outer capsule 106 after placing the inner capsule 102 inside the open reservoir. During this step, the outer capsule 106 may also be shaped, e.g. in order to adapt its shape to a shape of the carrier 204 or the piston 202 of the high-pressure apparatus 200.

In step 308, the outer capsule 106 is surrounded by the pressure medium 110, for example by placing the outer capsule 106 in a suitable container, e.g. comprising or consisting of polycrystalline calcium fluoride, with an opening and subsequently filling or closing the opening to form the pressure medium 110 surrounding the outer capsule 106. In another example, side walls of the outer capsule 106 may be surrounded by solid sleeves, e.g. comprising or consisting of polycrystalline calcium fluoride, and the resulting openings at the top and the bottom of the outer capsule 106 as well as other gaps between the sleeves may be closed with additional solid elements and/or filled with a powder.

Subsequently, in step 310, a temperature of the pressure medium 110 and/or a pressure applied to the pressure medium 110 is adjusted to bring the reaction medium 108 to a supercritical phase, e.g. by placing the device 100 in the high-pressure apparatus, heating with the heating elements 206 and advancing the piston 202 into the hole of the carrier 204 to compress the pressure medium 110. The heating and compression may be performed simultaneously or sequentially. Preferably, the heating is conducted after applying the pressure. In one example, a pressure of 4.0 GPa to 7.0 GPa is applied and subsequently the sample is heated to 1000°C to 1300°C while maintaining the pressure, thereby forming the supercritical fluid 212 within the outer capsule 106. The applied pressure and temperature may be adapted to the reactants in the reaction medium 108, e.g. to increase the efficiency of the diamond formation taking place in the supercritical fluid 212. In particular, the applied pressure and temperature may be chosen such that the diamond structure of carbon is thermodynamically favorable over the graphite structure.

In step 312, the supercritical phase 212 of the reaction medium 108 is maintained by continuously applying a pressure to the pressure medium 110 and keeping the pressure medium 110 at an appropriate temperature, e.g. with an active feedback loop monitoring the temperature with the temperature sensor 210 and heating via the heating elements 206 when necessary. At the same time, the hydrogen fugacity within the reaction medium 108 is stabilized by means of the buffer medium 104, which can provide or absorb hydrogen through the hydrogen-permeable enclosure of the inner capsule 102. As hydrogen exchange between the interior of the outer capsule 106 and the surrounding high-pressure apparatus is strongly inhibited by the pressure medium 110, the buffer medium 104 may be able to stabilize the hydrogen fugacity in order to maintain the supercritical fluid 212 and the diamond synthesis occurring therein over an extended period of time, e.g. 24 hours or more. During this time, the pressure and/or temperature may be adjusted, e.g. according to a predefined temperature profile to increase the efficiency of the diamond formation.

After performing the diamond synthesis, the device 100 may be cooled down to room temperature and pressure applied to the pressure medium 110 may be lowered to the ambient pressure. Subsequently, the device 100 can be removed from the high-pressure apparatus 200 to extract the diamond formed in the reaction medium 108 from the outer capsule 106.

The example shown in Fig. 3 only constitutes one specific example of the method according to the invention and can be modified in many ways. In one example, a device 100 comprising the inner capsule 102 with the buffer medium 104, the outer capsule 106 enclosing the inner capsule 102 and the reaction medium 108 as well as the pressure medium 110 surrounding the outer capsule 106 is provided in an assembled state and placed in the high-pressure apparatus 200 to perform steps 310 and 312 only. In other examples, the inner capsule 102 containing the buffer medium 104 can be provided in an assembled state and the method starts at step 304 or the outer capsule 106 can be provided in an assembled state and the method starts at step 308.

Furthermore, the order of the steps may be permuted as far as technically feasible and two or more steps can be performed simultaneously at least in part. For example, an open reservoir that the outer capsule 106 is to be formed from may be partially surrounded by the pressure medium 110 before placing the reaction medium 108 and/or the inner capsule 102 in the reservoir and closing the reservoir to form the outer capsule 106.

The embodiments of the present invention disclosed herein only constitute specific examples for illustration purposes. The present invention can be implemented in various ways and with many modifications without altering the underlying basic properties. Therefore, the present invention is only defined by the claims as stated below.

### LIST OF REFERENCE SIGNS

- 100: - Device for synthesizing diamond
- 102: - Inner capsule
- 104: - Buffer medium
- 106: - Outer capsule
- 108: - Reaction medium
- 110: - Pressure medium

- 200: - High-pressure apparatus
- 202: - Piston
- 203: - Carrier plate
- 204: - Carrier
- 206: - Heating element
- 208: - Spacer material
- 209: - Insulating material
- 210: - Temperature sensor
- 212: - Supercritical fluid

- 300: - Method for synthesizing diamond
- 302: - Step of providing the buffer medium in the inner capsule
- 304: - Step of providing the reaction medium in the outer capsule
- 306: - Step of enclosing the inner capsule inside the outer capsule
- 308: - Step of surrounding the outer capsule by the pressure medium
- 310: - Step of adjusting temperature and pressure to reach supercritical phase
- 312: - Step of maintaining the supercritical phase

## Claims

1. A device (100) for synthesizing diamond, the device (100) comprising:
an inner capsule (102) containing a buffer medium (104) for stabilizing a hydrogen fugacity, the inner capsule (102) consisting of a hydrogen-permeable material;
an outer capsule (106) enclosing the inner capsule (102), wherein the outer capsule (106) contains a reaction medium (108) containing reactants for a chemical reaction yielding diamond; and
a pressure medium (110) surrounding the outer capsule (106), wherein the pressure medium (110) is configured to transfer a pressure applied to an outer surface of the pressure medium (110) to an outer surface of the outer capsule (106) and wherein the pressure medium (110) is further configured to inhibit hydrogen exchange through the pressure medium (110) at a temperature of the pressure medium (110) and a pressure applied to the pressure medium (110) that are required to transform the reaction medium (108) to a supercritical phase (212).

2. The device (100) of claim 1, wherein the device (100) is configured to maintain the supercritical phase (212) of the reaction medium (108) while stabilizing a hydrogen fugacity within the reaction medium (108) to a target value, in particular for more than 12 hours, preferably more than 24 hours.

3. The device (100) of claim 1 or 2, wherein the pressure medium (110) is configured to prevent physical damage of the outer capsule (106) and/or a contamination of the reaction medium (108) at the applied pressure and the applied temperature and/or wherein the pressure medium (110) contains calcium fluoride, in particular polycrystalline calcium fluoride.

4. The device (100) according to any one of the preceding claims, wherein the material of the inner capsule (102) and a material of the outer capsule (106) are inert with respect to the reaction medium (108) and/or wherein the inner capsule (102) and the outer capsule (106) each consist of gold, copper, a gold alloy, a copper alloy or a gold-copper alloy.

5. The device (100) according any one of the preceding claims, wherein the buffer medium (104) comprises a metal-metal oxide buffer, in particular a Mo-MoO₂ buffer.

6. The device (100) according any one of the preceding claims, wherein the reaction medium (108) contains reactants for at least one of the following chemical reactions:
*CH*₄ → *C*^{(*diamond*)} + 2*H*₂
*C*₂*H*₆ → *C*^{(*diamond*)} + *CH*₄ + *H*₂
*CH*₄ + *O*₂ → *C*^{(*diamond*)} + 2*H*₂O
and/or wherein the reaction medium (108) comprises a fluid and/or a fluid-producing substance, in particular a carbon-saturated fatty acid, solid methane and/or adamantane.

7. The device (100) according any one of the preceding claims, wherein the inner capsule (102) has an ellipsoidal shape, in particular a spherical shape.

8. The device (100) according to any one of the preceding claims, further comprising a high-pressure apparatus (200) for applying a pressure to the pressure medium (110), wherein the high-pressure apparatus (200) is configured to generate a pressure of more than 3.0 GPa, preferably a pressure of at least 5.0 GPa, in particular a high-pressure apparatus (200) further configured to heat the pressure medium (110) to a temperature exceeding 800°C, preferably a temperature between 1000°C and 1300°C, and/or a high-pressure apparatus (200) that is a piston-cylinder apparatus, a belt apparatus or a multi-anvil press.

9. The device (100) according to any one of the preceding claims, wherein the reaction medium (108) further contains diamond seed crystals and/or a doping material, in particular a doping material comprising boron, nitrogen and/or phosphorus.

10. The device (100) according to any one of the preceding claims, wherein the outer capsule (106) further encloses a sensor capsule containing a redox sensor for monitoring a hydrogen fugacity and/or an oxygen fugacity.

11. A method for synthesizing diamond, the method comprising the following steps:
providing a device (100) according to any one of the preceding claims; and
adjusting a temperature of the pressure medium (110) and/or a pressure applied to the pressure medium (110) to transform the reaction medium (108) to a supercritical phase (212).

12. The method of claim 11, wherein said step of providing the device (100) according to any one of claims 1 to 10 comprises manufacturing the device (100) and wherein manufacturing the device (100) comprises the following steps:
providing the buffer medium (104) in the inner capsule (102);
providing the reaction medium (108) in the outer capsule (106);
enclosing the inner capsule (102) inside the outer capsule (106); and
surrounding the outer capsule (106) by the pressure medium (110).

13. The method of claim 12, further comprising maintaining the supercritical phase (212) of the reaction medium (108) while stabilizing a hydrogen fugacity within the reaction medium (108) to a target value, in particular for more than 12 hours, preferably more than 24 hours.

14. The method of claim 12 or 13, wherein providing the buffer medium (104) in the inner capsule comprises placing a metal component of the metal-metal oxide buffer in an inner capsule material without a metal oxide component of the metal-metal oxide buffer and forming the inner capsule (102) from the inner capsule material and/or wherein providing the buffer medium (104) in the inner capsule (102) comprises shaping the inner capsule (102) to form an ellipsoid, in particular a sphere.

15. The method according to any one of claims 11 to 14, wherein the pressure applied to the pressure medium (110) is between 3.0 GPa and 10.0 GPa, preferably between 4.0 GPa and 7.0 GPa and/or wherein the temperature of the pressure medium (110) is between 800°C and 1600°C, preferably between 1000°C and 1300°C.
